# EUROPÄISCHE PATENTSCHRIFT

(11) **EP 0 666 424 B1**
(45) Veröffentlichungstag und Bekanntmachung des Hinweises auf die Patenterteilung: **15.10.1997**
(21) Anmeldenummer: 95101408.3
(22) Anmeldetag: 02.02.1995
(51) Int. Cl.: F04D 29/06, H02K 29/00, H02K 21/24, F04D 25/06

(54) **Lüfter mit einem Lüfterrad**
Fan with rotor, in particular a radial fan rotor
Ventilateur avec rotor, particulièrement un rotor radial

(30) Priorität: 05.02.1994 DE 9401909 U
(43) Veröffentlichungstag der Anmeldung: 09.08.1995
(73) Patentinhaber: PAPST-MOTOREN GmbH & Co. KG, 78106 St Georgen (DE)
(72) Erfinder: Amrhein, Wolfgang, Prof. Dr.-Ing., A-4100 Ottensheim (DE); Schmider, Fritz, Ing. grad., D-78132 Hornberg (DE); Zuckschwert, Edgar, D-78112 St. Georgen (DE)

(56) Entgegenhaltungen:
- WO-A-93/19510
- DE-A- 2 718 428
- DE-U- 8 702 271
- FR-A- 2 653 832
- US-A- 4 866 324
- US-A- 4 885 488
- US-A- 5 176 509

## Beschreibung

Die Erfindung betrifft einen Lüfter mit einem Lüfterrad, welches auf dem permanentmagnetischen Rotor eines kollektorlosen Gleichstrommotors angeordnet ist.

Ein derartiger Lüfter ist aus dem DE-U-8 702 271 bekannt. Dieser Lüfter weist aber relativ viele Einzelteile und eine zu große Bauhöhe auf.

Ein Lüfter dieser Art ist auch in der US-A-5 176 509 beschrieben. Dieser Lüfter zeigt zwar einen vereinfachten Aufbau, ist aber ebenfalls in axialer Richtung zu hoch.

Ferner kennt man aus der WO93/19510 einen Lüfter mit einem Lüfterrad, welches auf dem permanentmagnetischen Rotor eines elektronisch kommutierten Kleinmotors angeordnet ist. Zwischen diesem Rotor und der Statorwicklung befindet sich ein Kurzschlußring, der das Anlauf-Drehmoment des Motors nicht verändert, aber es ermöglicht, die Betriebsdrehzahl des Motors auf einen gewünschten Wert zu senken.

Aus der DE-A-2 718 428 kennt man einen Kompakt-Kleinstlüfter, bei dem zur Erzeugung eines magnetischen Hilfsmoments auf einem Lagertragrohr ein etwa quadratisches Weicheisenstück festgeklebt ist, und zwar innerhalb eines Rotormagnetrings, um in Zusammenwirken mit diesem ein Reluktanzmoment zu erzeugen.

Zur Kühlung von wärmeerzeugenden Bauteilen auf Platten, insbesondere Leiterplatten, besteht zunehmend der Bedarf, in der Nähe dieser Bauteile für eine wirksame Abfuhr der Wärme einen kompakten Lüfter anzuordnen.

Die eingangs genannten und weitere bekannte Lüfter können zwar mit relativ hohem Aufwand auf einer Leiterplatte montiertwerden, lassen sich aber nicht wie sonstige Bauteile (Widerstände, Transistoren, Kondensatoren etc.) unmittelbar auf einer Leiterplatte bestücken und anschließend durch ein Lötbad schicken.

Aufgabe der Erfindung ist es, einen Lüfter der vorgenannten Art im Aufbau weiter zu vereinfachen und so zu gestalten, daß der komplett montierte Lüfter wie andere Bauteile unmittelbar auf einer Leiterplatte oder dergleichen bestückt werden kann.

Gelöst wird diese Aufgabe durch einen Lüfter mit einem Lüfterrad, welches als Teil des mit einem Rotormagneten versehenen Rotors eines kollektorlosen Gleichstrommotors ausgebildet ist, mit einer Statoranordnung, welche einen Träger für eine Statorwicklung aufweist, welche Statorwicklung mindestens eine Antriebswicklung und eine zur Steuerung der Kommutierung dienende Sensorwicklung aufweist, mit einem am Träger befestigten Lagertragrohr zur Aufnahme einer Lageranordnung für die Welle des Lüfterrades, mit einer auf der Außenseite des Lagertragrohres vorgesehenen magnetischen Anordnung zur Erzeugung eines magnetischen Hilfsmoments im Zusammenwirken mit dem Rotormagneten, mit einem am Träger vorgesehenen ferromagnetischen Element als magnetischer Rückschluß für den Rotormagneten, und mit am Träger vorgesehenen Befestigungsmitteln zur Befestigung des Trägers auf einer Leiterplatte oder dergleichen, und mit am Träger vorgesehenen elektrischen Anschlüssen für die mindestens eine Antriebswicklung und die Sensorwicklung zur elektrischen Verbindung dieser Wicklungen mit auf der Leiterplatte oder dergleichen vorgesehenen Antriebselektronik des Motors.

Der erfindungsgemäße Aufbau ermöglicht es, den fertig montierten Lüfter beispielsweise auf einer Leiterplatte eines Gerätes oder dergleichen aufzubringen, z.B. durch eine Schnapp- oder Steckverbindung, und anschließend mit der bestückten Leiterplatte durch ein Lötbad zu gehen und dort die elektrischen Anschlüsse der Wicklungen mit der Leiterplatte zu verbinden, womit eine weitere Montagevereinfachung erreicht wird.

Die erfindungsgemäße Gestaltung des Statorträgers, der vorzugsweise als Kunststoff-Formstück ausgebildet ist, und die im Formstück enthaltenen elektrischen Anschlüsse (z.B. eingespritzte Anschlußstifte) ermöglichen eine automatisierte Fertigung, d.h. das Wickeln, Anschlagen, Anlöten und Prüfen können auf einem Automaten erfolgen.

Das Kunststoff-Formstück nach der Erfindung kann ebenfalls vollautomatisch ohne manuelles Einlegen der Anschlußstifte und des Rückschlußelementes gefertigt werden.
Die gedeckelte Ausführung des Radiallüfterrades ermöglicht neben der geringen Bauhöhe eine bessere Führung des Luftstroms.
Der Aufbau des Lüfters gemäß der Erfindung erweitert die Anwendungsund Befestigungsmöglichkeiten.
Weitere Einzelheiten und vorteilhafte Weiterbidungen der Erfindung ergeben sich aus den im folgenden beschriebenen und in der Zeichnung dargestellten Ausführungsbeispielen sowie aus den Unteransprüchen.

Es zeigen
- Fig. 1: die Unteransicht eines ersten Ausführungsbeispiels eines erfindungsgemäßen Lüfters ;
- Fig. 2: einen Schnitt entlang der Linie II-II in Fig. 1 ;
- Fig. 3: ein zweites Ausführungsbeispiel eines erfindungsgemäßen Lüfters im Schnitt ;
- Fig. 4: ein drittes Ausführungsbeispiel eines erfindungsgemäßen Lüfters im Schnitt ;
- Fig. 5: ein viertes Ausführungsbeispiel eines erfindungsgemäßen Lüfters im Schnitt;
- Fig. 6 und 7: Anwendungsbeispiele ;
- Fig. 8 und 9: Lüfter gemäß der Erfindung mit zusätzlichem Luftführungsgehäuse und
- Fig. 10 bis 15: Befestigungsbeispiele für die erfindungsgemäßen Lüfter .

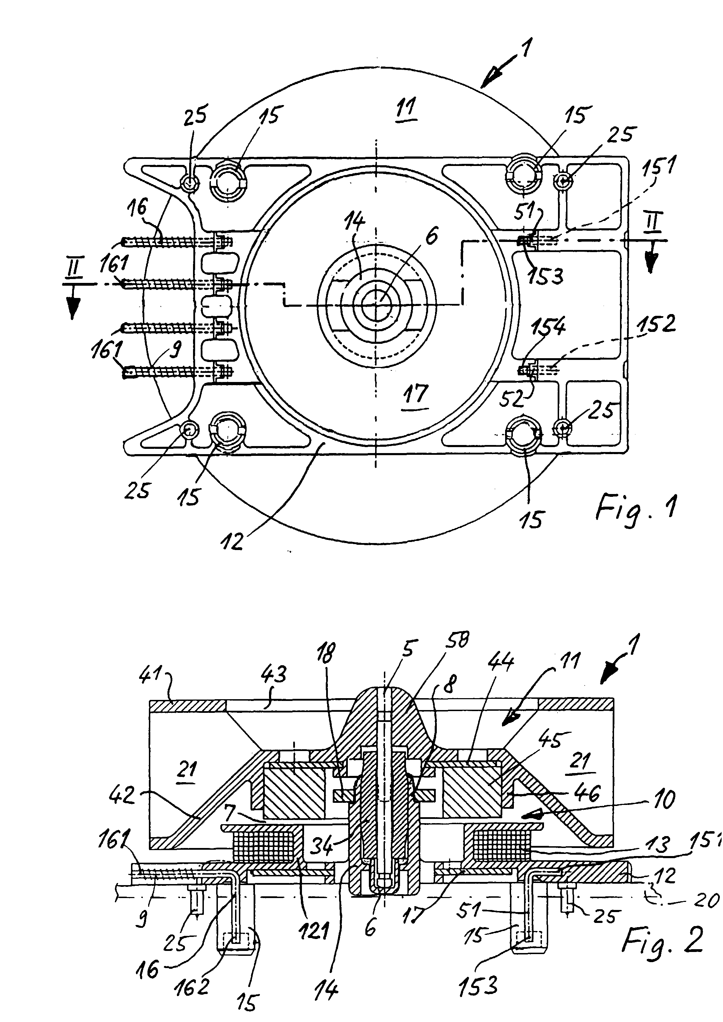

In Fig. 1 ist ein Lüfter 1 in einer Ansicht von unten dargestellt. Diese Ansicht zeigt einen Träger 12, der als Kunststoff-Formstück ausgebildet ist. Elektrische Anschlüsse 16 , beispielsweise als Anschlußstifte ausgebildet , und Führungsstifte 51;52 sind im Formstück 12 angeordnet, vorzugsweise eingespritzt. Diese eingespritzten oder eingelegten Anschlußstifte 16 bestehen aus elektrisch leiffähigem Material, beispielsweise aus Metall. Das eine Ende 161 der Stifte 16 ist leitend jeweils mit einem Ende der Wicklungsdrähte 9 verbunden und das andere Ende 162 der Stifte 16 ragt aus dem Träger 12 heraus. Diese Enden 162 werden in dafür vorgesehene Öffnungen oder Vertiefungen einer Leiterplatte 20 (strichpunktiert gezeichnet) gesteckt und verlötet , d. h. kontaktierend mit der Antriebselektronik für den Motor 10 des Lüfters 1 in Verbindung gebracht. Die Anschlußstifte 16 sind vorzugsweise rechtwinklig ausgebildet , wobei das eine Ende 161 in der Ebene des als im wesentlichen als ebenes Teil ausgebildeten Trägers 12 angeordnet ist und das Ende 162 im wesentlichen rechtwinklig aus dem Träger 12 herausragt. Ebenso sind die Führungsstifte 51; 52 vorzugsweise auch als rechtwinklige Stifte aus einem elektrisch leitfähigen Material ausgebildet , deren eine Enden 151 ; 152 in der Ebene des Trägers 12 liegen und deren andere Enden 153 ; 154 im wesentlichen in gleicher Länge und parallel zu den anderen Enden 162 der Anschlußstifte 16 aus dem Träger 12 herausragen.
Ein Rückschlußelement 17 für einen Rotormagneten 45 , im Ausführungsbeispiel eine ferromagnetische Blechscheibe in Form eines Kreisrings , ist ebenfalls im Formstück 12 mit eingespritzt. Befestigungsmittel 15, beispielsweise als geschlitzte Schnappbolzen ausgeführt , sind an der Unterseite des Formstücks angespritzt. Die Befestigungsmittel dienen als Montagehilfe bzw. zur Befestigung des Lüfters 1 an einer Leiterplatte 20 , die in Fig. 2 strichpunktiert angedeutet ist. An der Unterseite des Formstücks 12 sind Abstandsbolzen 15 angebracht , vorzugsweise auch angespritzt , die zur Einhaltung eines Abstands zwischen der Unterseite des Formstücks 12 und der Platte 20 dienen oder die als Paß- oder Führungsbolzen genutzt werden können.
Die oben beschriebene erfindungsgemäße Ausgestaltung des Stators , insbesondere des Statorträgers 12 , ermöglicht eine weitgehend automatisierte Fertigung , d.h. das Wickeln , Anschlagen und Anlegen der Wicklungsenden an die Stifte 16 , Anlöten und Prüfen können auf einem Automaten erfolgen.

Fig. 2 zeigt im Schnitt entlang der Linie II-II in Fig. 1 Einzelheiten des Ausführungsbeispiels gemäß Fig. 1. Auf einem Spulenkörper 121 , der in diesem Ausführungsbeispiel auch Teil des Trägers 12 ist , ist eine Statorwicklung 13 aufgebracht, die eine Antriebs - und eine Sensorwicklung aufweist.
Ein Lüfterrad 11 , in diesem Fall als sog. gedeckeltes Radiallüfterrad ausgeführt, enthält eine Welle 5 , die als Rotorwelle dient. Die Welle 5 ist in einer Lageranordnung 34 radial gelagert. Die Lageranordnung 34, beispielsweise ein Sinterdoppellager, ist in einem Lagertragrohr 14 befestigt. Die Lageranordnung 34 kann je nach Verwendung auch als Wälzlagerung ausgeführt sein .Das Lagertragrohr 14 ist vorzugsweise auch Teil des gespritzten Formstücks 12. Ein oberer in axialer Richtung verlängerter und im Außendurchmesser verkleinerter Rand 8 des Lagertragrohres 14 dient in Verbindung mit einem im Außendurchmesser verkleinerten Bereich des Sinterlagers 34 zur axialen Sicherung des Lagers 34 Das Sinterlager 34 läßt sich auch durch Kleben , Verstemmen u. ä. befestigen. Im Bereich des oberen Randes 8 ist eine magnetische Hilfsanordnung 18 (ferromagnetische oder permanentmagnetische Anordnung) befestigt. Diese Hilfsanordnung 18 kann zur weiteren Kostensenkung als aus gummimagnetischem Material gestanzte Scheibe ausgeführt sein. Eine in das Lagertragrohr 14 eingelegte Lagerschale 6 bildet die axiale Lagerung der Welle 5. Die Anordnung der Lagerschale 6 bestimmt die Größe des im wesentlichen ebenen Luftspaltes 7 zwischen einem Rotormagneten 45 und einer Statorwicklung 13. Dieser einfache und äußerst kostengünstige kollektorlose Gleichstrommotor 10 weist, wie bereits aus der DE- GM 87 02 271 bekannt, nur eine Statorwicklung auf, die aus einer Antriebswicklung und einer Sensorwicklung besteht und vorzugsweise bifilar gewickelt ist. Zur Vermeidung von Längen wird bezüglich der Form der Wicklung und der Schaltung auf den Inhalt der DE-GM 87 02 271 Bezug genommen.
Das Lüfterrad 11 enthält im wesentlichen radial verlaufende Schaufeln 21 , die zwischen einem ersten Führungsglied 41 und einem zweiten Führungsglied 42 angeordnet sind. Das erste Führungsglied 41 weist eine zentrale Lufteintrittsöffnung 43 auf und ist im wesentlichen eben ausgebildet. Das erste und das zweite Luftführungsglied 41; 42 bilden im axialen Querschnitt gesehen in diesem Ausführungsbeispiel einen sich in Richtung nach außen erweiternden Luftaustrittsquerschnitt . Für andere Anwendungen können auch ein sich verengender Querschnitt und auch verschiedene Querschnittsformen konzipiert werden.
Im Bereich der Lufteintrittsöffnung 43 befindet sich ein Abschnitt 58 , in welchem die Welle 5 des Lüfterrades 11 befestigt ist. Im zweiten Luftführungsglied 42 ist eine ferromagnetische Rückschlußscheibe 44 befestigt, auf der der Rotormagnet 45 für den motorischen Antrieb des Lüfterrades 11 angeordnet ist. Es kann auch ein polorientierter Magnet ohne Rückschlußscheibe eingesetzt werden.
Die elektrischen Bauelemente (Transistoren , Widerstände usw.) für den Motor 1 befinden sich auf der Leiterplatte 20.

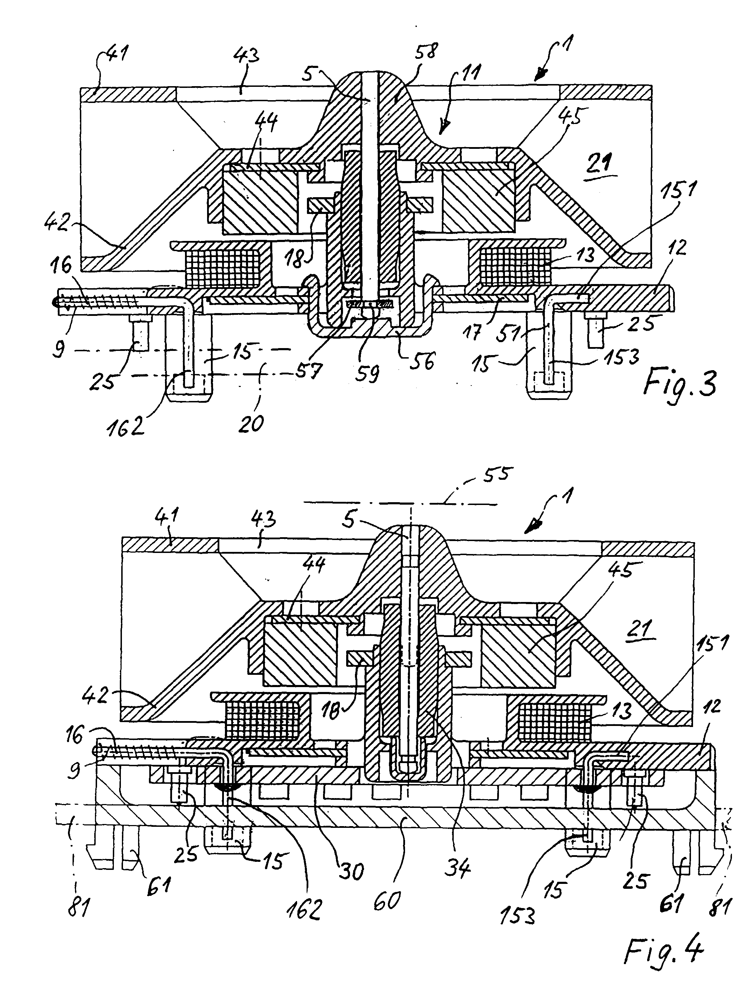

Fig. 3 zeigt ein zweites Ausführungsbeispiel mit an der Unterseite des Formstücks angebrachten Abstandsbolzen 25 , durch die ermöglicht wird , auch unterhalb des Lüfters 1 auf der Leiterplatte 20 Bauteile anzuordnen. Eine Axiallagerkappe 56 dient wie die Lagerschale 6 in Fig. 1 u. 2 zur axialen Lagerung der Welle 5.
Ein Sicherungsring 57 greift in eine Ringnut 59 der Welle 5 und sichert so ein ungewolltes Trennen des Rotors vom Stator.

Fig. 4 zeigt ein drittes Ausführungsbeispiel eines Lüfters, der im wesentlichen den oben beschriebenen entspricht, allerdings eine eigene Leiterplatte 30 für die Antriebselektronik des Lüftermotors aufweist. Dieser Lüfter wird dort eingesetzt, wo eine Antriebselektronik auf einer Geräte-Leiterplatte nicht vorgesehen ist. Auch dieser Lüfter mitsamt seiner Leiterplatte 30 kann automatisch bestückt und angelötet werden. Die Befestigung geschieht über eine zusätzliche, durch eine Schnappverbindung befestigte Kunststoffabdeckung 60 , über Befestigungsmittel 15 oder federnde Schnapphaken 61 oder seitliche Laschen 81. Die Abdeckung 60 dient als Schutzabdeckung und gleichzeitig als Halterung für den Lüfter 1 , wobei das Formstück 12 fest mit der Abdeckung 60 verbunden ist, z.B mittels einer Schnapp- oder Rastverbindung. Die beiden Führungsstifte 51; 52 , die bei den oben beschriebenen Ausführungsbeispielen nur eine mechanische Stützfunktion haben , werden hier als Anschlußstifte für die Stromversorgung des Lüfters benutzt. Dabei werden die einen Enden 151 ; 152 mit der Stromzuführung des Motors 10 und die anderen Enden 153 ; 154 mit der Stromquelle in Verbindung gebracht. Eine Anschlagfläche 55 dient als Axialsicherung für den Rotor des Motors 10 .

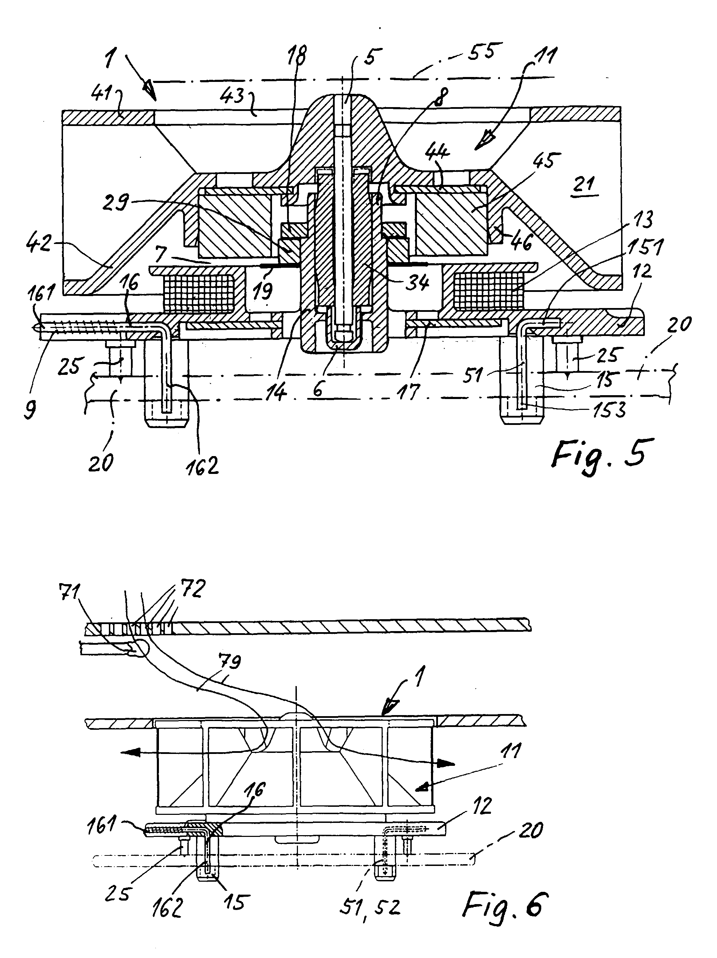

Fig. 5 entspricht im wesentlichen dem in Fig. 2 dargestellten und beschriebenen Ausführungsbeispiel . Zusätzlich ist hier auf der äußeren Umfangsfläche des Lagertragrohrs 14 in axialem Abstand zur Hilfsmagnetscheibe 18 eine ferromagnetische Scheibe 19, beispielsweise eine Stahlscheibe, aufgebracht. Zur sicheren Befestigung ist zwischen den Scheiben 18 und 19 ein Abstandsring 29 angeordnet , der einfach auf das Lagertragrohr 14 aufgepreßt sein kann. Diese Ausführung kommt zur Anwendung,wenn der Lüfter 1 "hängend" eingebaut wird. Dabei ragt der Außenbereich der Stahlscheibe 19 mit geringem Abstand in axialer Richtung in den stirnseitigen Bereich des Rotormagneten 45. Durch diese Anordnung werden axiale Magnetkräfte auf den Rotor erzeugt, die das Herausfallen des Rotors verhindern.
Ebenso wird das Geräusch , das durch ein Anschlagen des Rotors des Lüfters 1 an die Anschlagfläche 55 verursacht wird (z.B. aufgrund hoher Stoßbelastungen in Kraftfahrzeugen) , verhindert.

Fig. 6 zeigt prinzipiell die Verwendung des Lüfters 1 als sog. Sensorlüfter in einem Kraftfahrzeug. Über einen Sensor 71 wird durch Öffnungen 72 , z.B. im Armaturenbrett, ein Luftstrom 79 aus dem Innenraum des Fahrzeugs angesaugt und mittels des Sensors beispielsweise die Raumtemperatur geregelt .

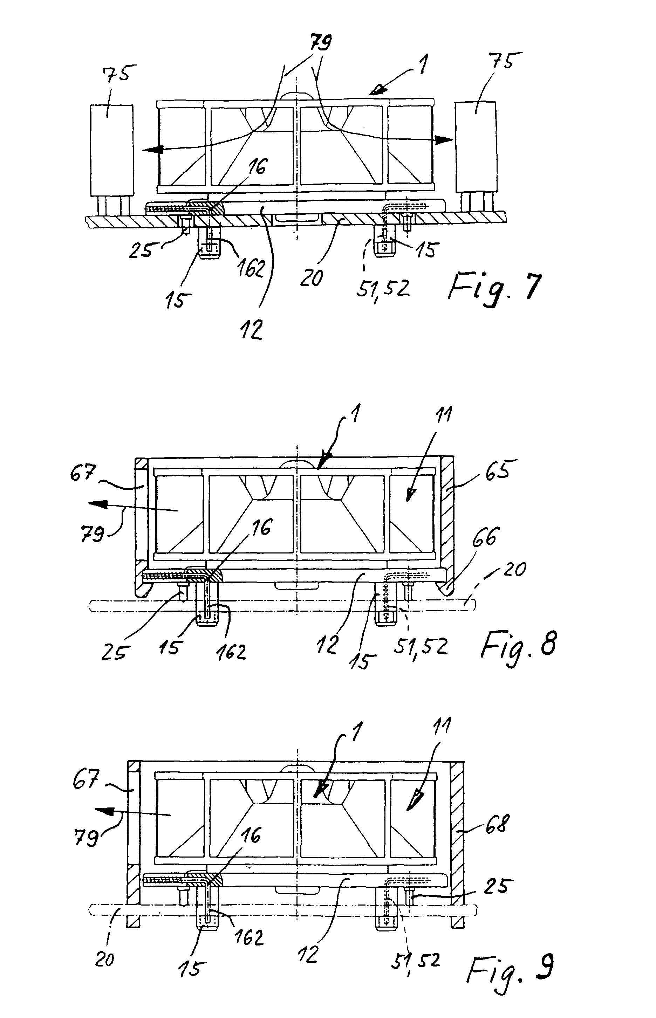

Fig. 7 zeigt im Prinzip die Verwendung des Lüfters 1 als sog. Leiterplattenlüfter zur Kühlung von wärmeerzeugenden Bauelementen 75 auf einer Leiterplatte 20 oder dergleichen. Der sehr kompakte erfindungsgemäße Lüfter 1 wird auf der Leiterplatte 20 an der Stelle angebracht , wo der Luftstrom 79 die Bauelemente 75 am wirksamstem kühlen kann .

Fig. 8 zeigt ein zusätzliches Luftführungs-Gehäuse 65 , das außerhalb um das Lüfterrad 11 herum angeordnet und am Formstück 12 mit Schnapphaken 66 befestigt ist. Eine Luftaustrittsöffnung 67 kann dabei je nach Verwendungszweck verschiedene Querschnittsformen und Querschnittsgrößen aufweisen und so den kühlenden Luftstrom 79 gezielt ausblasen .

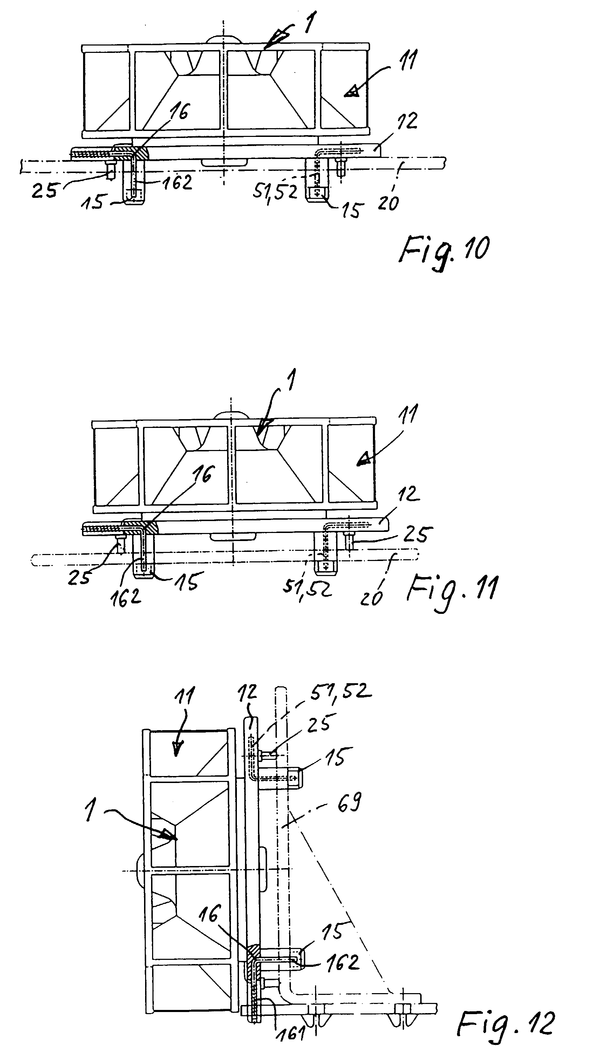

In Fig. 9 ist ein zusätzliches Luftführungs-Gehäuse 68 auf der Geräte-Leiterplatte 20 angebracht. In beiden Fällen (Fig.8 u. 9) wird der Querschnitt und die Größe der Luftaustrittsöffnung 67 so ausgelegt, daß der kühlende Luftstrom 79 möglichst optimal und in einer vorgebbaren Richtung verläuft.

Fig. 10 und Fig. 11 zeigen , vereinfacht dargestellt , die waagerechten Befestigungsmöglichkeiten des Lüfters 1 zum einen direkt auf der Leiterplatte 20 (Fig. 10) und zum andern im Abstand zur Leiterplatte 20 (Fig. 11), der durch die Bolzen 25 erreicht wird .

In Fig. 12 ist ein abgewinkelter Halter 69 dargestellt, der eine weitere Möglichkeit der Befestigung des Lüfters 1 zeigt. Die Enden 162 der Stifte 16 können mit geringen Mehrkosten so ausgeführt werden , daß sie durch die Leiter- oder Befestigungsplatte hindurchragen. Die verlängerten Enden 162 können so als mechanische und gleichzeitig elektrische Verbindung und Befestigung dienen. Die verlängerten Enden 162 können aber auch als Lötstifte genutzt werden , die wie oben beschrieben mit der Leiterplatte mittels Löten verbunden werden .

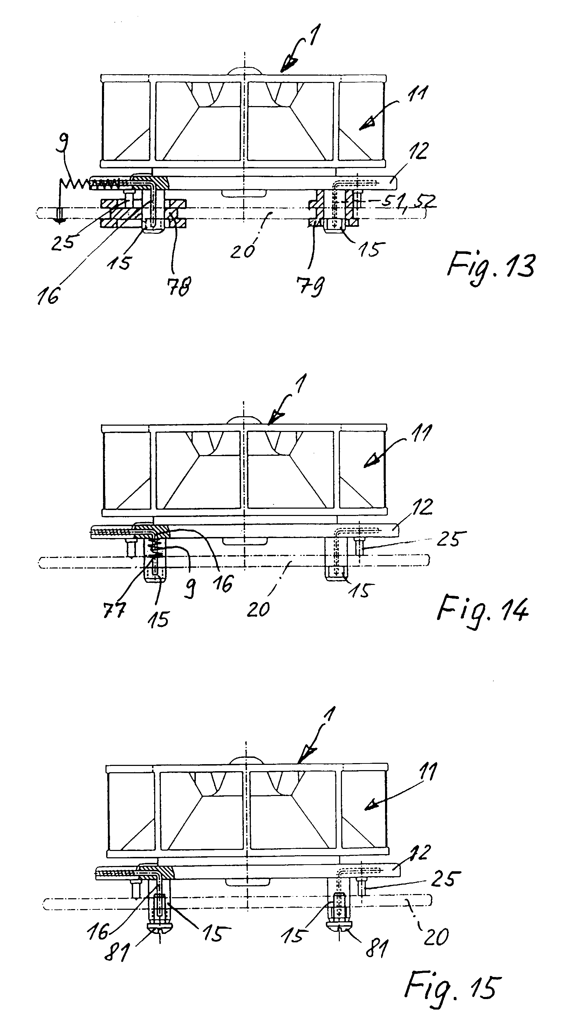

Der Einsatz des Lüfters 1 kann in schwingungsbelasteten Geräten mit einer Anordnung gemäß Fig. 13 erfolgen. Der Lüfter 1 wird über seine Befestigungsteile 15 in elastische Buchsen 78 ; 79 eingebracht. Die Buchsen werden einfach in dafür vorgesehene Bohrungen eingeknöpft. Die Anschlußdrähte 9 der Wicklung 13 sind in der Art einer Schraubenfeder gestaltet, um auch hier die Schwingungen aufzufangen und eine Lösung der Lötverbindungen zu verhindern.

In Fig. 14 ist eine besonders einfache Art der Kontaktierung der Anschlußdrähte 9 auf dazugehörigen Kontaktstellen 77 auf der Leiterplatte 20. Die als Druckfedern ausgebildeten Enden der Anschlußdrähte 9 kontaktieren unmittelbar die Kontakte 77 .

Für eine besonders sichere Befestigung des Lüfters 1 ist die Ausführung gemäß Fig. 15 geeignet. Die geschlitzten Befestigungsteile 15 sind mit einem Innengewinde versehen. Nach dem Einstecken in die Leiterplatte oder dgl. werden Schrauben 81 in das Innengewinde der Teile 15 geschraubt , wodurch sich die Teile im Endbereich aufspreizen.

Eine wesentliche Kosteneinsparung erbringt das Vorsehen der Antriebselektronik für den Betrieb des Lüfters 1 auf der geräteseitigen Leiterplatte 20. Diese Antriebselektronik wird in der Regel vom Anwender auf der Leiterplatte 20 aufgebracht.
Der erfindungsgemäße Aufbau eines Lüfters ist in dieser Anmeldung am Beispiel eines Antriebsmotors mit elektronischer Kommutierung , nur einer Antriebswicklung und axialem Luftspalt erläutert , nicht aber auf diesen Motortyp eingeschränkt.

Selbstverständlich sind im Rahmen der vorliegenden Erfindung noch zahlreiche weitere Abwandlungen und Modifikationen möglich , wie sich das für den Fachmann ohne weiteres ergibt.

## Patentansprüche

1. Lüfter mit einem Lüfterrad (11), welches als Teil des mit einem Rotormaneten (45) versehenen Rotors eines kollektorlosen Gleichstrommotors (10) ausgebildet ist, mit einer Statoranordnung, welche einen Träger (12) für eine Statorwicklung (13) aufweist,
welche Statorwicklung mindestens eine Antriebswicklung und eine zur Steuerung der Kommutierung dienende Sensorwicklung aufweist,
mit einem am Träger (12) angeordneten Lagertragrohr (14) zur Aufnahme einer Lageranordnung (34) für die Welle (5) des Lüfterrades (11),
mit einer auf der Außenseite des Lagertragrohres (14) vorgesehenen magnetischen Anordnung (18) zur Erzeugung eines magnetischen Hilfsmoments im Zusammenwirken mit dem Rotormagneten (45),
mit einem am Träger (12) vorgesehenen ferromagnetischen Element (17) als magnetischer Rückschluß für den Rotormagneten (45),
mit am Träger (12) vorgesehenen Befestigungsmitteln (15) zur Befestigung des Trägers (12) auf einer Leiterplatte (20) oder dergleichen,
und mit am Träger (12) vorgesehenen elektrischen Anschlüssen (16) für die mindestens eine Antriebswicklung und die Sensorwicklung zur elektrischen Verbindung dieser Wicklungen mit auf der Leiterplatte (20) oder dergleichen vorgesehenen Antriebselektronik des Motors.

2. Lüfter nach Anspruch 1, bei welchem der Träger (12) als einteiliges Kunststoff-Formstück ausgebildet ist, welches einen Spulenkörper (121) aufweist, auf dem sich die Statorwicklung (13) befindet, welche die Antriebs- und Sensorwicklung aufweist,
mit im Träger (12) eingespritzten Anschlüssen (16), die als Metallstifte ausgeführt sind, wobei an einem Ende (161) der Stifte das jeweilige Wicklungsende der Wicklungsdrähte (9) kontaktiert ist und das andere Ende (162) der Stifte aus dem Träger (12) herausragt zur Bestückung des Trägers (12) auf der Leiterplatte (20) und zur elektrischen Verbindung mit dieser,
mit einem am Träger (12) innerhalb des Spulenkörpers (121) angeordneten Lagertragrohr (14), in welchem eine Lageranordnung (34) für die Lagerung der Welle (5) befestigt ist,
mit am Träger (12) angebrachten Befestigungsmitteln (15) zu seiner Befestigung auf der Leiterplatte (20),
und mit am Träger (12) angebrachten Abstandsbolzen (25).

3. Lüfter nach Anspruch 2 , bei welchem eingespritzte abgewinkelte Anschlußstifte ( 16 ) aus elektrisch leiffähigem Material und eingespritzte abgewinkelte Führungsstifte ( 51 , 52 ) vorgesehen sind , wobei ein Ende ( 151 , 152 ) der Stifte im wesentlichen in der Ebene des Trägers ( 12 ) angeordnet ist, während das andere Ende ( 153 , 154 ) im wesentlichen in gleicher Länge und parallel zu den anderen Enden ( 162 ) der Anschlußstifte ( 16 ) aus dem Formstück ( 12 ) herausragt .

4. Lüfter nach Anspruch 2, bei welchem der Träger (12) als im wesentlichen ebenes Formstück ausgebildet ist, bei dem sich die elektrischen Anschlüsse ( 16 ) für die Wicklungen ( 13 ) etwa in der Ebene des Formstücks und außerhalb des für die Bewicklung des Spulenkörpers ( 121 ) erforderlichen Raums erstrecken .

5. Lüfter nach einem oder mehreren der vorhergehenden Ansprüche, bei welcher auf der Außenseite des Lagertragrohres (14) ein permanentmagnetisches Teil ( 18 ) , insbesondere eine Scheibe aus gummimagnetischem Material , vorgesehen ist, welches Teil ( 18 ) im Zusammenwirken mit dem Rotormagneten ( 45 ) ein drehstellungsabhängiges Hilfsmoment erzeugt.

6. Lüfter nach einem oder mehreren der vorhergehenden Ansprüche, bei welchem im Formstück (12) im Bereich außerhalb des Lagertragrohres (14) ein bevorzugt plattenförmiges ferromagnetisches Teil (17) angeordnet ist .

7. Lüfter nach einem oder mehreren der vorhergehenden Ansprüche, bei welchem im Lagertragrohr (14) im Bereich eines Endes des Lagertragrohres (14) eine Lagerschale (6) für eine axiale Lagerung der Welle (5) angebracht ist.

8. Lüfter nach einem oder mehreren der vorhergehenden Ansprüche, mit einem Lüfterrad mit im wesentlichen radial verlaufenden Schaufeln (21) , die zwischen einem ersten Luftführungsglied (41) und einem zweiten Luftführungsglied (42) angeordnet sind , von denen das erste Luftführungsglied (41) eine zentrale Lufteintrittsöffnung (43) aufweist und das zweite Luftführungsglied (42) , zusammen mit dem ersten Luftführungsglied (41) , im axialen Schnitt gesehen, einen sich in Richtung nach außen erweiternden Luftdurchtrittsquerschnitt querschnitt bildet und im Bereich der Lufteintrittsöffnung (43) einen (58) aufweist, in welchem die Welle (5) des Lüfterrades (11) befestigt ist, ferner mit einer im zweiten Luftführungsglied (42) befestigten ferromagnetischen Rückschlußscheibe (44), und
mit mindestens einem im zweiten Luftführungsglied (42) befestigten, auf der Rückschlußscheibe (44) angeordneten Dauermagneten (45) für den motorischen Antrieb des Lüfterrades (11) .

9. Lüfter nach Anspruch 8, bei welchem sich das zweite Luftführungsglied (42) in axialer Richtung über das vom Lüfterad (11) abgewandte Ende des Dauermagneten (45) hinaus erstreckt.

10. Lüfter nach Anspruch 8 oder 9 , bei welchem das zweite Luftführungsglied (42) mindestens bereichsweise etwa kegelstumpfförmig aus gebildet ist .

11. Lüfter nach einem der Ansprüche 8 bis 10 , bei dem das erste Luftführungsglied (41) im wesentlichen eben ausgebildet ist.

12. Lüfter nach einem oder mehreren der Ansprüche 8 bis 11 , bei dem der Abschnitt des zweiten Luftführungsgliedes (42) , in welchem die Welle (5) befestigt ist, durch die Lufteintrittsöffnung (43) hindurchragt .

13. Lüfter nach einem oder mehreren der Ansprüche 8 bis 12 , bei dem das zweite Luftführungsglied (42) mit einem kragenartigen Fortsatz (46) versehen ist, welcher um den Außenumfang des ringförmig ausgebildeten Dauermagneten (45) herum angeordnet ist .

14. Lüfter nach einem oder mehreren der Ansprüche 8 bis 13, bei dem das erste und das zweite Luftführungsglied ( 41, 42 ) im wesentlichen denselben Durchmesser aufweisen .

15. Lüfter nach einem oder mehreren der Ansprüche 8 bis 14, bei dem die ferromagnetische Rückschlußscheibe (44) als Ringscheibe ausgebildet und mit ihrem Innenrand in einem Abschnitt des zweiten Luftführungsgliedes (42) gehaltert ist.

16. Lüfter nach einem oder mehreren der vorhergehenden Ansprüche
mit einer Leiterplatte ( 30 ) , die unmittelbar am Träger ( 12 ) angebracht ist und Schaltungselemente für den kollektorlosen Gleichstrommotor trägt und mit einer Abdeckung ( 60 ) , die federnde Schnapphaken ( 61 ) aufweist.

17. Lüfter nach einem oder mehreren der vorgehenden Ansprüche
mit einer ferromagnetischen Scheibe ( 19 ), die auf der äußeren Umfangsfläche des Lagertragrohrs ( 14 ) angeordnet ist und zur Erzeugung eines im wesentlichen axialen magnetischen Zuges auf den Rotormagneten ( 45 ) dient, und mit einem Abstandsring ( 29 ) , der zwischen der Magnetscheibe ( 18 ) und der Scheibe ( 19 ) auf dem Lagertragrohr ( 14 ) befestigt ist , wobei der Außenbereich der Scheibe ( 19 ) in den Bereich des Rotormagneten ( 45 ) ragt .

## Claims

1. Fan with a fan wheel (11) which is embodied as part of the rotor provided with a rotor magnet (45) of a commutatorless direct current motor (10), with a stator arrangement which exhibits a carrier (12) for a stator winding (13),
which stator winding exhibits at least one driving winding and a sensor winding serving for control of commutation,
with a bearing supporting tube (14) disposed on the carrier (12) for accommodation of a bearing arrangement (34) for the shaft (5) of the fan wheel (11),
with a magnetic arrangement (18) provided on the outside of the bearing supporting tube (14) for generation of a magnetic auxiliary moment in collaboration with the rotor magnet (45),
with a ferromagnetic element (17) provided on the carrier (12) as magnetic return for the rotor magnet (45),
with fixing means (15) provided on the carrier (12) for fixture of the carrier (12) on a circuit board (20) or the like,
and with electrical connections (16) provided on the carrier (12) for the at least one driving winding and the sensor winding for electrical connection of these windings with motor driving electronics provided on the circuit board (20) or the like.

2. Fan according to claim 1, in which the carrier (12) is embodied as a one-piece plastic moulding which exhibits a coil former (121) on which is located the stator winding (13) which exhibits the driving and sensor windings,
with connectors (16) embedded in the carrier (12) and embodied as metal pins, whereby at one end (161) of the pins the respective winding end of the winding wires (9) makes contact and the other end (162) of the pins projects out of the carrier (12) for fitment of the carrier (12) on the circuit board (20) and for electrical connection with the latter,
with a bearing supporting tube (14) disposed on the carrier (12) inside the coil former (121) and in which a bearing arrangement (34) is fixed for mounting of the shaft (5),
with fixing means (15) fitted to the carrier (12) for its fixture on the circuit board (20),
and with spacer pins (25) fitted to the carrier (12).

3. Fan according to claim 2, in which embedded angled connecting pins (16) made of electrically conducting material and embedded angled guiding pins (51, 52) are provided, whereby one end (151, 152) of the pins is disposed essentially in the plane of the carrier (12), whereas the other end (153, 154) projects out of the moulding (12) essentially with the same length and parallel to the other ends (162) of the connecting pins (16).

4. Fan according to claim 2, in which the carrier (12) is embodied as an essentially flat moulding in which the electrical connections (16) for the windings (13) extend roughly in the plane of the moulding and outside the space required for winding the coil former (121).

5. Fan according to one or more of the preceding claims, in which a permanently magnetic part (18), in particular a disc of rubber magnetic material, is provided on the outside of the bearing supporting tube (14), which part (18) generates an auxiliary moment depending on the rotational position in collaboration with the rotor magnet (45).

6. Fan according to one or more of the preceding claims, in which a preferably plate-shaped ferromagnetic part (17) is disposed in the moulding (12) in the area outside the bearing supporting tube (14).

7. Fan according to one or more of the preceding claims, in which a bearing shell (16) for axial mounting of the shaft (5) is fitted in the bearing supporting tube (14) in the area of one end of the bearing supporting tube (14).

8. Fan according to one or more of the preceding claims, with a fan wheel with blades (21) which run essentially radially and are disposed between a first air guiding element (41) and a second air guiding element (42), of which the first air guiding element (41) exhibits a central air inlet opening (43) and the second air guiding element (42), together with the first air guiding element (41), viewed in axial section, forms an air passage cross-section which widens in the outward direction and in the area of the air inlet opening (43) exhibits a portion (58) in which the shaft (5) of the fan wheel (11) is fixed, further with a ferromagnetic return disc (44) fixed in the second air guiding element (42), and
with at least one permanent magnet (45) fixed in the second air guiding element (42) and disposed on the return disc (44) for the motorised drive of the fan wheel (11).

9. Fan according to claim 8, in which the second air guiding element (42) extends in the axial direction beyond the end of the permanent magnetic (45) remote from the fan wheel (11).

10. Fan according to claim 8 or 9, in which the second air guiding element (42) is embodied with roughly the shape of a truncated cone at least in areas.

11. Fan according to one of claims 8 to 10, in which the first air guiding element (41) is embodied essentially flat.

12. Fan according to one or more of claims 8 to 11, in which the portion of the second air guiding element (42) in which the shaft (5) is fixed projects through the air inlet opening (43).

13. Fan according to one or more of claims 8 to 12, in which the second air guiding element (42) is provided with a collar-like projection (46) which is disposed around the outside circumference of the ring-shaped permanent magnet (45).

14. Fan according to one or more of claims 8 to 13, in which the first and the second air guiding elements (41, 42) exhibit essentially the same diameter.

15. Fan according to one or more of claims 8 to 14, in which the ferromagnetic return disc (44) is embodied as a ring-shaped disc and is mounted by its inner edge in a portion of the second air guiding element (42).

16. Fan according to one or more of the preceding claims, with a circuit board (30) which is fitted directly to the carrier (12) and carries circuit elements for the commutatorless direct current motor, and with a cover (60) which exhibits sprung snap hooks (61).

17. Fan according to one or more of the preceding claims, with a ferromagnetic disc (19) which is disposed on the outer circumferential surface of the bearing supporting tube (14) and serves for generation of an essentially axial magnetic pull on the rotor magnet (45), and with a spacer ring (29) which is fixed between the magnetic disc (18) and the disc (19) on the bearing supporting tube (14), the outer area of the disc (19) projecting into the area of the rotor magnet (45).

## Revendications

1. Ventilateur avec une roue de ventilateur (11), réalisé sous forme de partie du rotor, pourvu d'un aimant de rotor (45), d'un moteur à courant continu (10) de type sans collecteur, avec un dispositif stator présentant un support (12) pour un bobinage stator (13),
le bobinage stator présentant au moins un enroulement d'entraînement et un enroulement capteur servant à commander la commutation,
avec un tube support de palier (14) disposé sur le support (12), pour supporter un dispositif palier (34) destiné à l'arbre (5) de la roue de ventilateur (11),
avec un dispositif magnétique (18) prévu sur la face extérieure du tube support de palier (14) afin de générer un couple auxiliaire magnétique en coopération avec l'aimant de rotor (45),
avec un élément ferromagnétique (17) prévu sur le support (12), servant de bouclage magnétique pour l'aimant de rotor (45),
avec des moyens de fixation (15) prévus sur le support (12) pour assurer la fixation du support (12) sur une plaquette à circuit imprimé (20) ou analogue,
et avec des raccordements électriques (16) prévus sur le support (12) pour le au moins un enroulement d'entraînement et l'enroulement capteur, afin d'assurer la liaison électrique de ces enroulements avec l'électronique d'entraînement du moteur, prévue sur la plaquette à circuit imprimé (20) ou analogue.

2. Ventilateur selon la revendication 1, dans lequel le support (12) est réalisé sous forme de pièce moulée d'un seul tenant en matière plastique, présentant un corps de bobine (121) sur lequel se trouve l'enroulement stator (13) qui présente l'enroulement d'entraînement et l'enroulement capteur,
avec des raccordements (16) noyés par injection dans le support (12) et réalisés sous forme de broches métalliques, à une extrémité (161) des broches étant réalisée la mise en contact de l'extrémité d'enroulement respective des fils d'enroulement (9) et l'autre extrémité (162) des broches sortant du support (12) pour effectuer le montage du support (12) sur la plaquette à circuit imprimé (20) et pour assurer la liaison électrique avec celle-ci,
avec un tube support de palier (14) disposé sur le support (12), à l'intérieur du corps de bobine (121) et dans lequel est fixé un dispositif palier (34) destiné au logement de l'arbre (5);
avec des moyens de fixation (15) montés sur le support (12) pour assurer sa fixation sur la plaquette à circuit imprimé (20),
et avec des boulons d'espacement (25) montés sur le support (12).

3. Ventilateur selon la revendication 2, dans lequel des broches de raccordement coudées, noyées par injection, réalisées en un matériau conducteur d'électricité, sont prévus ainsi que des broches de guidage (51, 52) noyées par injection et coudées, une extrémité (151, 152) des broches étant disposée essentiellement dans le plan du support (12) tandis que l'autre extrémité (153, 154) sort essentiellement de la même longueur et parallèlement aux autres extrémités (162) des broches de raccordement (16), hors de la pièce moulée (12).

4. Ventilateur selon la revendication 2, dans lequel le support (12) est réalisé sous forme de pièce moulée essentiellement plane, pour laquelle les raccordements décrits (16) destinés aux enroulements (13) s'étendent dans le plan de la pièce moulée et hors de l'espace nécessaire pour le bobinage du corps de bobine (121).

5. Ventilateur selon l'une ou plusieurs des revendications précédentes, dans lequel en face extérieure du tube support palier (14) est prévue une partie (18) à magnétisme permanent, en particulier un disque de matériau magnétique réalisé en caoutchouc, la partie (18) générant en coopération avec l'aimant de rotor (45) un couple auxiliaire dépendant de la position de rotation.

6. Ventilateur selon l'une ou plusieurs des revendications précédentes, dans lequel dans la pièce moulée (12) est disposée, dans la zone située à l'extérieur du tube support palier (14), une partie (17) ferromagnétique de préférence réalisée sous forme de plaque.

7. Ventilateur selon l'une ou plusieurs des revendications précédentes, dans lequel dans le tube support de palier (14) est monté dans la zone d'une extrémité du tube support de palier (14), une coquille de support (6) destinée à constituer un palier axial pour l'arbre (5).

8. Ventilateur selon l'une ou plusieurs des revendications précédentes, avec une roue de ventilateur ayant des aubes (21) s'étendant essentiellement radialement, disposées entre un premier organe de guidage d'air (41) et un deuxième organe de guidage d'air (42), dont le premier organe de guidage d'air (41) présente une ouverture d'entrée d'air (43) centrale et le deuxième organe de guidage d'air (42) présente, conjointement avec le premier organe de guidage d'air (41), si l'on observe en coupe axiale, une section transversale offerte au passage d'air qui va en s'agrandissant dans la direction orientée radialement vers l'extérieur et présente dans la zone de l'ouverture d'entrée d'air (43), un tronçon (58) dans lequel est fixé l'arbre (5) de la roue de ventilateur (11), avec en outre un disque de bouclage (44), ferromagnétique fixé dans le deuxième organe de guidage d'air (42), et
avec au moins un aimant permanent (45) fixé dans le deuxième organe de guidage d'air (42) et disposé sur le disque de bouclage (44), aimant (45) prévu pour l'entraînement par moteur de la roue de ventilateur (11).

9. Ventilateur selon la revendication 8, dans lequel le deuxième organe de guidage d'air (42) s'étend en direction axiale au-dessus de l'extrémité opposée à la roue de ventilateur (11) de l'aimant permanent (45).

10. Ventilateur selon la revendication 8 ou 9, dans lequel le deuxième organe de guidage d'air (42) est réalisé, au moins par zones, de manière tronconique.

11. Ventilateur selon l'une des revendications 8 à 10, dans lequel le premier organe de guidage d'air (41) est réalisé de manière essentiellement plane.

12. Ventilateur selon l'une ou plusieurs des revendications 8 à 11, dans lequel le tronçon du deuxième organe de guidage d'air (42) dans lequel est fixé l'arbre (5) passe à travers et dépasse l'ouverture d'entrée d'air (43).

13. Ventilateur selon l'une ou plusieurs des revendications 8 à 12, dans lequel le deuxième organe de guidage d'air (42) est pourvu d'un prolongement (46) du genre d'une collerette qui est disposée autour de la périphérie extérieure de l'aimant permanent (45) réalisé en forme d'anneau.

14. Ventilateur selon l'une ou plusieurs des revendications 8 à 13, dans lequel le premier et le deuxième organe de guidage d'air (41, 42) présentent essentiellement le même diamètre.

15. Ventilateur selon l'une ou plusieurs des revendications 8 à 14, dans lequel le disque de bouclage (44) ferromagnétique est réalisé sous forme de disque annulaire et maintenu par son bord intérieur dans un tronçon du deuxième organe de guidage d'air (42).

16. Ventilateur selon l'une ou plusieurs des revendications précédentes, avec une plaquette à circuit imprimée (30), montée directement sur le support (12) et portant des éléments de commutation destinés au moteur à courant continu sans collecteur et avec un recouvrement (60) qui présente les crochets d'encliquetage (61) à effet élastique.

17. Ventilateur selon l'une ou plusieurs des revendications précédentes, avec un disque (19) ferromagnétique disposé sur la surface périphérique extérieure du tube support de palier (14) et servant à générer une traction magnétique essentiellement axiale sur l'aimant de rotor (45), et avec une bague d'espacement (29) qui est fixée entre le disque magnétique (18) et le disque (19) sur le tube support de palier (14), la zone extérieure du disque (19) pénétrant dans la zone de l'aimant permanent (45) .
